# EUROPEAN PATENT SPECIFICATION

(11) **EP 2 689 662 B1**
(45) Date of publication and mention of the grant of the patent: **22.07.2015**
(21) Application number: 13177710.4
(22) Date of filing: 23.07.2013
(51) Int. Cl.: A01M 7/00

(54) **Atomiser with drift alleviation means**
Sprühgerät für Reihenkulturen mit Driftschutz
Atomiseur avec moyens de contrôle de dérivation

(30) Priority: 23.07.2012 IT BO20120399
(43) Date of publication of application: 29.01.2014
(73) Proprietor: Martignani Ing. C. Di Martignani Stefano & C. S.r.l., 48020 Sant'Agata Sul Santerno (IT)
(72) Inventor: Martignani, Claudio, 48022 Lugo (IT)
(74) Representative: Manconi, Stefano

(56) References cited:
- EP-A1- 1 449 433
- WO-A1-2007/043090
- DE-A1-102010 012 053
- DE-U1- 8 127 328
- DE-U1- 8 416 938
- FR-A1- 2 948 038
- GB-A- 2 205 052
- US-A1- 2007 099 495

## Description

The present invention relates to an apparatus for pesticide treatments.

In the field of pesticide treatments, it is known to provide an apparatus of the type comprising a self-propelled vehicle; a pair of panels parallel to each other, which have a substantially rectangular shape, are arranged, in use, on opposite sides of an agricultural crop to be treated, and each comprises a respective plurality of outlet nozzles directed towards the outlet nozzles of the other panel; and a feeding device for feeding through the outlet nozzles of the two panels a liquid pesticide mixture consisting in a pesticide product dissolved in water.

Such devices are known from e.g. DE 89169838U1.

The liquid pesticide mixture fed through the outlet nozzles of each panel and not retained by the agricultural crop is intercepted by the other panel, flows down in a lower containing tank, and is fed back into a containing tank of the liquid pesticide mixture to be recycled and reused again.

The apparatuses for pesticide treatments known of the type described above are relatively bulky, complex, and expensive for the presence of the two panels that allow the recovery of the liquid pesticide mixture not retained by the agricultural crop.

Moreover, the continuous recycling of the recovered liquid pesticide mixture inevitably involves a variation of the concentration of the pesticide product dissolved in it making the liquid pesticide mixture more diluted when the apparatus operates in the presence of dew or rain or more concentrated when the apparatus operates in the presence of relatively high temperatures that cause the evaporation of water.

It is an object of the present invention to provide an apparatus for pesticide treatments that is free from the drawbacks described above.

According to the present invention, there is provided an apparatus for pesticide treatments according to claim 1 and a treatment method according to claim 16.

The present invention will now be described with reference to the accompanying drawings, which illustrate a non-limiting embodiment, wherein:
Figure 1 is a schematic perspective view of a preferred embodiment of the apparatus for pesticide treatments of the present invention;
Figure 2 is a schematic front view of a detail of the apparatus of Figure 1; and
Figure 3 is a schematic front view of a detail of Figure 2.

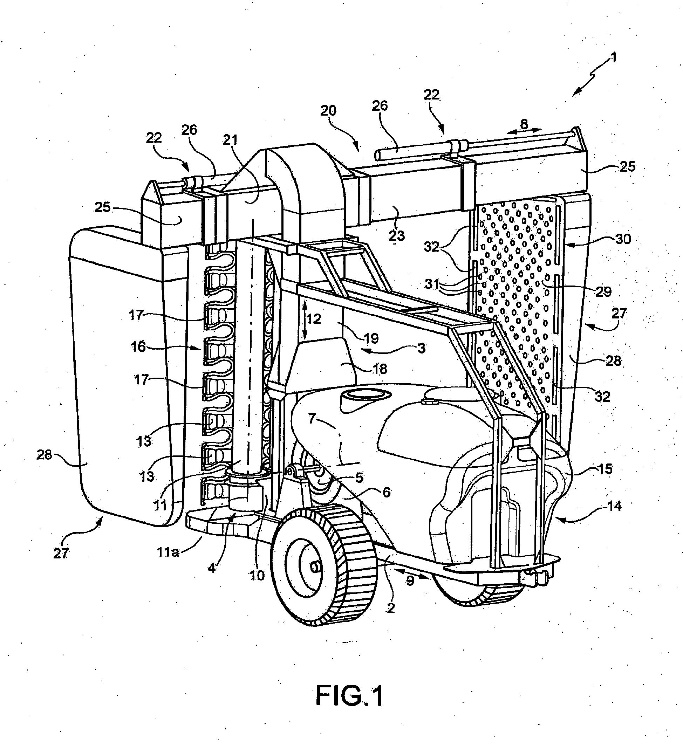

With reference to figure 1, with 1 is shown, as a whole, an apparatus for pesticide treatments comprising a self-propelled vehicle 2 and a pneumatic nebulizer 3 mounted on the vehicle 2 itself.

The nebulizer 3 comprises a pneumatic device 4 provided, in this case, with an impeller 5 (in this case a centrifugal impeller) mounted within a containing box-shaped body 6 to rotate, with respect to the box-shaped body 6 itself, about a rotation axis 7 parallel to a direction 8 substantially transverse to an infeed direction 9 of the apparatus 1.

The air flow generated by the impeller 5 is fed through a bottom outlet 10 of the box-shaped body 6 to two vertical manifolds 11 parallel to each other and to a direction 12 perpendicular to the directions 8 and 9.

Each manifold 11 is mounted to rotate about a longitudinal axis 11a parallel to the direction 12 in a manner independent from the other manifold 11, and communicates with the external environment through a plurality of outlet mouths 13, which are distributed along the manifold 11 in the direction 12, and are oriented so as to feed into the external environment an air flow opposite to the air flow fed into the external environment through the mouths 13 of the other manifold 11.

In the present case, the flows of air fed through the mouths 13 of the two manifolds 11 are directed according to the two ways of direction 8.

About the above description, it should be noted that the flow rate of air fed through each manifold 11 is selectively controlled by a feeding valve (not shown), which is mounted at the inlet of the manifold 11 itself, and is controlled in a synchronized manner with the feeding valve of the other manifold 11.

The nebulizer 3 also comprises a feeding device 14 provided with a tank 15 for containing a pesticide product (in this case a liquid pesticide product) and, for each mouth 13, a respective outlet nozzle (not shown) hydraulically connected to the tank 15 by way of a feeding duct (not shown).

The amount of pesticide product fed from the tank 15 to each outlet nozzle (not shown) is selectively controlled by at least one dosing device of a known type and not illustrated.

Each outlet nozzle (not shown) is mounted inside its respective mouth 13 so as to allow the flow of air fed along the respective manifold 11 and through the mouth 13 itself to spray the pesticide product fed through the outlet nozzle (not shown) and to distribute into the external environment a sprayed pesticide mixture.

The sprayed pesticide mixture is electrostatically charged with an electric charge of given sign by an electric device 16 comprising, for each mouth 13, a respective electrode 17 of substantially cylindrical shape, which is made of conductive metallic material, and is mounted on the outside of, and in a position facing, the mouth 13 itself.

Following the electrostatic charging of the sprayed pesticide mixture, the agricultural crop subject to the pesticide treatment assumes an electrical charge opposite in sign to that of the sprayed pesticide mixture, which is deposited, therefore, on the agricultural crop itself by the electrostatic force of attraction that is generated between the electrical charges of opposite sign.

The air flow generated by the impeller 5 is fed, furthermore, through an upper outlet 18 of the box-shaped body 6 to a first feeding duct 19 substantially vertical, which extends in the direction 12, and has an upper end pneumatically connected to a second feeding duct 20 extending in the direction 8.

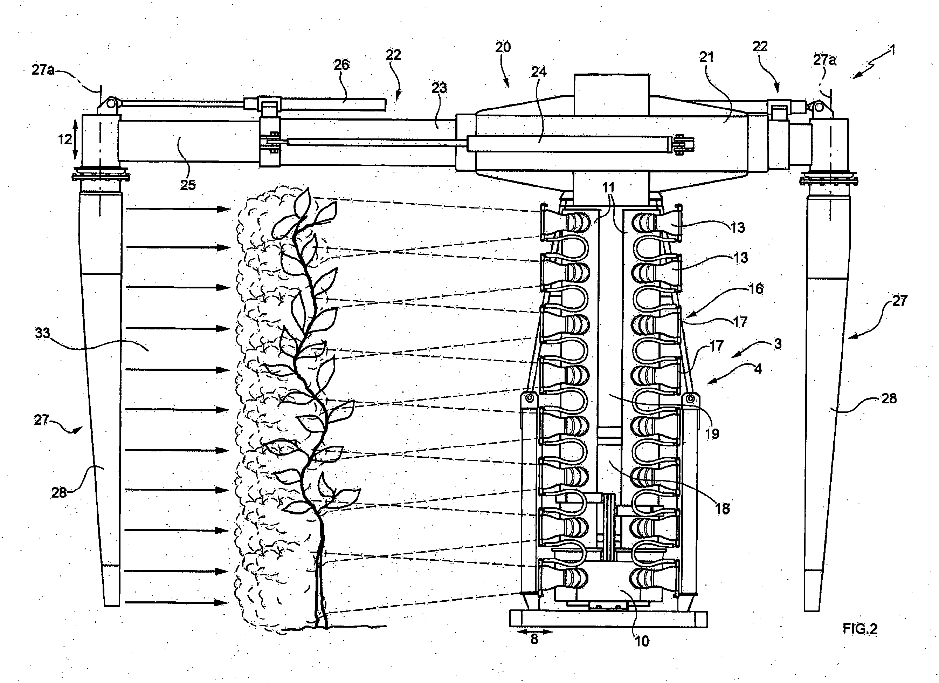

As illustrated in Figures 1 and 2, the duct 20 comprises a fixed central portion 21 connected with the duct 19, and two lateral telescopic portions 22 mounted at the opposite free ends of the portion 21 itself.

Each portion 22 comprises a first arm 23 mobile with respect to the portion 21 and under the thrust of a first actuating cylinder 24, in the direction 8 between a retracted position and an extracted position, and a second arm 25 mobile, with respect to the respective arm 23 and under the thrust of a second actuating cylinder 26, in the direction 8 between a retracted position and an extracted position.

The free end of each arm 25 supports a shielding panel 27, which extends downwardly from the arm 25, has a substantially rectangular shape, and is arranged in a position facing the mouths 13 of one of the manifolds 11.

The panel 27 is coupled in a rotatory manner to the arm 25 to rotate, with respect to the arm 25 itself, about a rotation axis 27a parallel to the direction 12 as a function of the position of the corresponding manifold 11 and, therefore, of the corresponding mouths 13 about the respective axis 11a.

According to a variant not shown, the panel 27 is coupled in a sliding manner to the arm 25 to move, with respect to the arm 25 itself, in the direction 9 as a function of the position of the corresponding manifold 11 and, therefore, of the corresponding mouths 13 about the respective axis 11a.

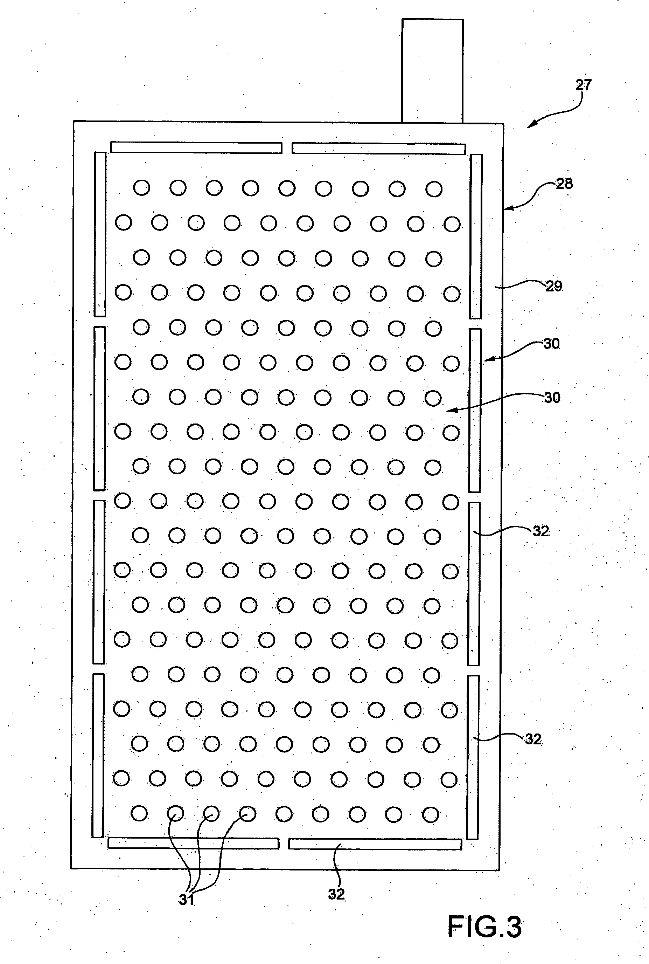

With reference to Figures 1 and 3, the panel 27 comprises a box-shaped body 28, which is pneumatically connected to the duct 20, and is delimited by a flat front wall 29, which faces the respective mouths 13, and is made of an electrically insulating plastic material.

The panel 27 is provided with a plurality of outlet elements 30 formed through the wall 29 for feeding the flow of air under pressure advanced through the ducts 19 and 20 against the pesticide mixture fed through the respective mouths 13.

The elements 30 comprise a plurality of holes 31 and a plurality of elongated shaped slits 32 distributed along a peripheral edge of the wall 29 and around the holes 31 themselves.

In regard to what said above, it should be noted that the elements 30 may be formed through the wall 29 so as to guide the flow of air under pressure fed through the elements 30 parallel to the direction 8, or according to a substantially frustoconical shape.

In particular, the holes 31 are substantially perpendicular to the wall 29 and the slits 32 are inclined by an angle comprised between 0° and 90° with respect to the wall 29 so as to generate, on the whole, a flow of air under pressure diverging towards the outside and having a front surface bigger than the surface of the wall 29.

In use, the two arms 23, 25 of each portion 22 are moved in their extracted positions so as to define a respective infeed channel 33 engaged in a sliding manner by the agricultural crop to be treated.

As a consequence of the advancement of the apparatus 1 in the direction 9, the agricultural crop arranged in each channel 33 is subject on one side to the action of the pesticide mixture fed through the respective mouths 13 and the other side to the action of the flow of pressurized air fed through the respective shielding panel 27.

The flow of pressurized air fed through each shielding panel 27 contrasts the trajectory of the pesticide mixture fed through the outlet mouths 13 of the respective manifold 11 so as to promote the complete electrostatic attraction between the pesticide mixture and the agricultural crop and to reduce or completely reset the dispersion of the pesticide mixture into the external environment.

In other words, the outlet mouths 13 and the outlet elements 30 are configured so that the flow of pesticide mixture fed through the outlet mouths 13 of each manifold 11 is contained within the flow of pressurized air fed through the outlet elements 30 of the respective shielding panel 27.

The presence of the shielding panels 27 allows, therefore, to avoid the use of complex, expensive, and inefficient recirculation systems required when part of the pesticide mixture fed through the mouths 13 is not retained by the treated agricultural crops.

## Claims

1. An apparatus for pesticide treatments comprising a self-propelled vehicle (2); a pneumatic device (4) comprising, in turn, at least one manifold (11) provided with a plurality of outlet mouths (13) substantially aligned with one another in a first direction (12) parallel to the manifold (11) itself, and an impeller (5) adapted to feed an air flow along the manifold (11) and through the outlet mouths (13); a feeding device (14) comprising, in turn, a containing tank (15) for at least one pesticide product, and a first feeding circuit for feeding the pesticide product from the containing tank (15) into the air flow fed through the outlet mouths (13) and for generating a flow of pesticide mixture; an electric device (16) for electrically charging the flow of pesticide mixture fed through the outlet mouths (13); at least one shielding panel (27) having a box-shaped body (28), which is pneumatically connected with a source of gas under pressure, and is limited by a flat front wall (29), which faces the outlet mouths (13), and is provided with a plurality of outlet elements (30) adapted to feed a flow of gas under pressure against the flow of pesticide mixture fed through the outlet mouths (13); the outlet mouths (13) and the outlet elements (30) being configured so that the flow of pesticide mixture is contained within the flow of gas under pressure.

2. The apparatus according to claim 1, wherein the shielding panel (27) is mobile in a second direction (8) substantially transverse to the first direction (12) between an operating position, in which the shielding panel (27) is arranged at a first distance from the outlet mouths (13) to define an infeed channel (33) engaged in a sliding manner by the agricultural crop to be treated, and a rest position, in which the shielding panel (27) is arranged at a second distance from the outlet mouths (13) smaller than the first distance.

3. The apparatus according to claim 1 or 2, wherein the impeller (5) is mounted in a rotatory manner inside a box-shaped frame (6) having a first outlet (10) pneumatically connected to the manifold (11) and a second outlet (18) pneumatically connected to the shielding panel (27).

4. The apparatus according to any preceding claims, wherein the pneumatic device (4) also comprises a second feeding circuit (19, 20) interposed between the impeller (5) and the shielding panel (27) for feeding air under pressure to the shielding panel (27) along a path completely separated and independent from the manifold (11).

5. The apparatus according to claim 4, wherein the second feeding circuit (19, 20) comprises a first feeding duct (19) pneumatically connected to the impeller (5), and a second telescopic feeding duct (20), which is pneumatically connected to the first feeding duct (19) and supports connected thereto in correspondence to its free end, the shielding panel (27).

6. The apparatus according to claim 5, wherein the second feeding duct (20) is mobile between an extracted position, wherein the shielding panel (27) is arranged at a first distance from the outlet mouths (13) to define an infeed channel (33) engaged in a sliding manner by the agricultural crop to be treated, and a retracted position.

7. The apparatus according to any preceding claims, wherein the outlet elements (30) comprise outlet holes (31) and/or outlet slits (32) of elongated shape.

8. The apparatus according to any preceding claims, wherein the outlet elements (30) comprise a plurality of outlet holes (31) and a plurality of outlet slits (32) of elongated shape arranged around the outlet holes (31).

9. The apparatus according to claim 8, wherein the outlet holes (31) are substantially perpendicular to the front wall (29) and the outlet slits (32) are oriented according to an angle comprised between 0° and 90° with respect to the front wall (29) so that the flow of gas under pressure has an outwardly diverging shape.

10. The apparatus according to any preceding claims, wherein the front wall (29) is made of an electrically insulating plastic material.

11. The apparatus according to any preceding claims, wherein the pneumatic device (4) comprises two of said manifolds (11) provided with respective outlet mouths (13) oriented to feed into the outer environment two flows of pesticide mixture that are opposite to each other.

12. Apparatus according to claim 11 and comprising two of said shielding panels (27) each one facing the outlet mouths (13) of a respective manifold (11).

13. The apparatus according to any preceding claims, wherein each manifold (11) is mounted to rotate about its own longitudinal axis (11a).

14. The apparatus according to any preceding claims, wherein each shielding panel (27) is mounted to rotate about a rotation axis (27a) substantially parallel to the first direction (12).

15. The apparatus according to any preceding claims, wherein the pneumatic device (4) comprises, for each one of said manifolds (11), a feeding valve mounted at the inlet of the manifold (11) for selectively controlling the air flow rate fed through the manifold (11) itself.

16. A method for the pesticide treatment of agricultural crops comprising the steps of:
feeding a flow of air through a plurality of outlet mouths (13);
feeding a pesticide product within the air flow fed through the outlet mouths (13) and generating a flow of pesticide mixture;
electrically charging the flow of pesticide mixture fed through the outlet mouths (13); and
feeding the flow of pesticide mixture against a first side of an agricultural crop;
and **characterized by** also comprising the step of:
feeding a flow of a gas under pressure against the flow of pesticide mixture outgoing from a second side of the agricultural crop opposite to the first side so as to prevent the dispersal in the environment of the pesticide mixture itself.

## Patentansprüche

1. Vorrichtung für Behandlungen mit Pestiziden, wobei die Vorrichtung aufweist:
ein Fahrzeug (2) mit eigenem Antrieb;
eine pneumatische Vorrichtung (4), die ihrerseits aufweist: mindestens ein Verteilerrohr (11), das mit mehreren Auslassöffnungen (13) versehen ist, die im Wesentlichen entlang einer zum Verteilerrohr (11) parallelen ersten Richtung (12) angeordnet sind, und einen geeigneten Ventilator (5) zum Fördern eines Luftstroms entlang des Verteilerrohrs (11) und durch die Auslassöffnungen (13);
eine Speisevorrichtung (14), die ihrerseits aufweist: einen Aufnahmebehälter (15) zur Aufnahme mindestens eines Pestizidprodukts und einen ersten Speisekreis zum Einspeisen des Pestizidprodukts aus dem Aufnahmebehälter (15) in den durch die Auslassöffnungen (13) hindurchgegangenen Luftstrom und zum Erzeugen eines Pestizidgemischstroms;
eine elektrische Vorrichtung (16) zum elektrischen Aufladen des durch die Auslassöffnungen (13) hindurchgegangenen Pestizidgemischstroms;
mindestens eine Abschirmplatte (27), die einen kastenförmigen Körper (28) aufweist, der mit einer Druckgasquelle pneumatisch verbunden ist und von einer ebenen Vorderwand (29) begrenzt ist, die den Auslassöffnungen (13) gegenüberliegt und mit mehreren Auslasselementen (30) versehen ist, die geeignet sind, einen Druckgasstrom gegen den durch die Auslassöffnungen (13) hindurchgegangenen Pestizidgemischstrom bereitzustellen;
wobei die Auslassöffnungen (13) und die Auslasselemente (30) derart konfiguriert sind, dass der Pestizidgemischstrom in dem Druckgasstrom eingeschlossen ist.

2. Vorrichtung nach Anspruch 1, wobei die Abschirmplatte (27) in eine zweite Richtung (8), die zur ersten Richtung (12) im Wesentlichen transversal ist, bewegbar ist zwischen einer Arbeitsposition, in welcher die Abschirmplatte (27) in einem ersten Abstand von den Auslassöffnungen (13) angeordnet ist, um einen Einführungskanal (33) zu bilden, in welchem das zu behandelnde landwirtschaftliche Gewächs gleitend im Eingriff ist, und einer Ruheposition, in welcher die Abschirmplatte (27) in einem zweiten Abstand von den Auslassöffnungen (13) angeordnet ist, wobei der zweite Abstand kleiner als der erste Abstand ist.

3. Vorrichtung nach Anspruch 1 oder 2, wobei der Ventilator (5) drehbar in einem kastenförmigen Rahmen (6) eingebaut ist, der einen mit dem Verteilerrohr (11) pneumatisch verbundenen ersten Auslass (10) und einen mit der Abschirmplatte (27) pneumatisch verbundenen zweiten Auslass (18) hat.

4. Vorrichtung nach einem der vorstehenden Ansprüche, wobei die pneumatische Vorrichtung (4) außerdem aufweist: einen zwischen dem Ventilator (5) und der Abschirmplatte (27) angeordneten zweiten Speisekreis (19,20) zum Zuführen von Druckluft zu der Abschirmplatte (27) entlang eines Pfads, der völlig getrennt und unabhängig von dem Verteilerrohr (11) ist.

5. Vorrichtung nach Anspruch 4, wobei der zweite Speisekreis (19,20) ein mit dem Ventilator (5) pneumatisch verbundenes erstes Speiserohr (19) und ein zweites teleskopisches Speiserohr (20) aufweist, das mit dem ersten Speiserohr (19) pneumatisch verbunden ist und an seinem freien Ende die dort angebrachte Abschirmplatte (27) trägt.

6. Vorrichtung nach Anspruch 5, wobei das zweite Speiserohr (20) zwischen einer ausgezogenen Position, in welcher die Abschirmplatte (27) in einem ersten Abstand von den Auslassöffnungen (13) angeordnet ist, um einen Einführungskanal (33) zu bilden, in welchem das zu behandelnde landwirtschaftliche Gewächs gleitend im Eingriff ist, und einer zurückgezogenen Position bewegbar ist.

7. Vorrichtung nach einem der vorstehenden Ansprüche, wobei die Auslasselemente (30) Auslasslöcher (31) und/oder längliche Auslassschlitze (32) aufweisen.

8. Vorrichtung nach einem der vorstehenden Ansprüche, wobei die Auslasselemente (30) mehrere Auslasslöcher (31) und mehrere längliche Auslassschlitze (32), die um die Auslasslöcher (31) herum angeordnet sind, aufweisen.

9. Vorrichtung nach Anspruch 8, wobei die Auslasslöcher (31) im Wesentlichen senkrecht zu der Vorderwand (29) sind und die Auslassschlitze (32) in einem Winkel zwischen 0° und 90° bezüglich der Vorderwand (29) orientiert sind, so dass der Druckgasstrom auswärts divergiert.

10. Vorrichtung nach einem der vorstehenden Ansprüche, wobei die Vorderwand (29) aus einem elektrisch isolierenden Kunststoffmaterial hergestellt ist.

11. Vorrichtung nach einem der vorstehenden Ansprüche, wobei die pneumatische Vorrichtung (4) zwei Verteilerrohre (11) aufweist, die mit jeweiligen Auslassöffnungen (13) versehen sind, die so orientiert sind, um zwei einander entgegengesetzt gerichtete Pestizidgemischströme in die äußere Umgebung abzugeben.

12. Vorrichtung nach Anspruch 11 und mit zwei Abschirmplatten (27), die jeweils den Auslassöffnungen (13) eines jeweiligen Verteilerrohrs (11) gegenüberliegen.

13. Vorrichtung nach einem der vorstehenden Ansprüche, wobei jedes Verteilerrohr (11) angebracht ist, derart, dass es um seine eigene Längsachse (11a) drehbar ist.

14. Vorrichtung nach einem der vorstehenden Ansprüche, wobei jede Abschirmplatte (27) angebracht ist, derart, dass sie um eine Drehachse (27a), die im Wesentlichen parallel zur ersten Richtung (12) ist, drehbar ist.

15. Vorrichtung nach einem der vorstehenden Ansprüche, wobei die pneumatische Vorrichtung (4) für jedes Verteilerrohr (11) ein an dem Einlass des Verteilerrohrs (11) angeordnetes Speiseventil aufweist, um die Rate des durch das Verteilerrohr (11) zugeführten Luftstroms selektiv zu steuern.

16. Verfahren zur Behandlung von landwirtschaftlichen Gewächsen mit Pestiziden, wobei das Verfahren die folgenden Schritte aufweist:
Fördern eines Luftstroms durch mehrere Auslassöffnungen (13);
Einspeisen eines Pestizidprodukts in den durch die Auslassöffnungen (13) hindurchgegangenen Luftstrom und Erzeugen eines Pestizidgemischstroms;
elektrisches Aufladen des durch die Auslassöffnungen (13) hindurchgegangenen Pestizidgemischstroms; und
Blasen des Pestizidgemischstroms gegen eine erste Seite eines landwirtschaftlichen Gewächses;
**dadurch gekennzeichnet, dass** das Verfahren außerdem den Schritt aufweist:
Blasen eines Druckgasstroms gegen den Pestizidgemischstrom ausgehend von einer der ersten Seite gegenüberliegenden zweiten Seite des landwirtschaftlichen Gewächses, um ein Ausbreiten des Pestizidgemisches in die Umgebung zu verhindern.

## Revendications

1. Appareil pour des traitements aux pesticides, comprenant un véhicule auto-propulsé (2) ; un dispositif pneumatique (4) comprenant, lui-même, au moins un manifold (11) muni d'une pluralité d'embouchures de sortie (13) sensiblement alignées les unes avec les autres dans une première direction (12) parallèle au manifold (11) lui-même, et une hélice (5) adaptée de façon à délivrer un écoulement d'air le long du manifold (11) et à travers les embouchures de sortie (13) ; un dispositif de délivrance (14) comprenant, lui-même, un réservoir de contenant (15) pour au moins un produit pesticide, et un premier circuit de délivrance pour délivrer le produit pesticide à partir du réservoir de contenant (15) dans l'écoulement d'air délivré à travers les embouchures de sortie (13), et pour générer un écoulement de mélange pesticide ; un dispositif électrique (16) pour charger électriquement l'écoulement de mélange pesticide délivré à travers les embouchures de sortie (13) ; au moins un panneau de blindage (27) comportant un corps en forme de boîte (28), qui est pneumatiquement relié à une source de gaz sous pression, et qui est limité par une paroi avant plate (29), qui fait face aux embouchures de sortie (13), et qui est muni d'une pluralité d'éléments de sortie (30) adaptés de façon à délivrer un écoulement de gaz sous pression à l'encontre de l'écoulement de mélange pesticide délivré à travers les embouchures de sortie (13) ; les embouchures de sortie (13) et les éléments de sortie (30) étant configurés de telle sorte que l'écoulement de mélange pesticide soit contenu à l'intérieur de l'écoulement de gaz sous pression.

2. Appareil selon la revendication 1, dans lequel le panneau de blindage (27) est mobile dans une deuxième direction (8) sensiblement transversale à la première direction (12) entre une position de fonctionnement, dans laquelle le panneau de blindage (27) est disposé à une première distance des embouchures de sortie (13) de façon à définir un canal de délivrance d'entrée (33) venant en contact de manière coulissante avec la culture agricole devant être traitée, et une position de repos, dans laquelle le panneau de blindage (27) est disposé à une deuxième distance des embouchures de sortie (13), inférieure à la première distance.

3. Appareil selon la revendication 1 ou 2, dans lequel l'hélice (5) est montée d'une manière rotative à l'intérieur d'un bâti en forme de boîte (6) comportant un premier orifice de sortie (10) pneumatiquement relié au manifold (11) et un deuxième orifice de sortie (18) pneumatiquement relié au panneau de blindage (27).

4. Appareil selon l'une quelconque des revendications précédentes, dans lequel le dispositif pneumatique (4) comprend également un deuxième circuit de délivrance (19, 20) interposé entre l'hélice (5) et le panneau de blindage (27) pour délivrer de l'air sous pression au panneau de blindage (27) le long d'un trajet complètement séparé et indépendant du manifold (11).

5. Appareil selon la revendication 4, dans lequel le deuxième circuit de délivrance (19, 20) comprend un premier conduit de délivrance (19) pneumatiquement relié à l'hélice (5), et un deuxième conduit de délivrance télescopique (20), qui est pneumatiquement relié au premier conduit de délivrance (19) et qui supporte, relié à celui-ci en correspondance avec son extrémité libre, le panneau de blindage (27).

6. Appareil selon la revendication 5, dans lequel le deuxième conduit de délivrance (20) est mobile entre une position extraite, dans laquelle le panneau de blindage (27) est disposé à une première distance des embouchures de sortie (13) de façon à définir un canal de délivrance d'entrée (33) venant en contact de manière coulissante avec la culture agricole devant être traitée, et une position rétractée.

7. Appareil selon l'une quelconque des revendications précédentes, dans lequel les éléments de sortie (30) comprennent des trous de sortie (31) et/ou des fentes de sortie (32) de forme allongée.

8. Appareil selon l'une quelconque des revendications précédentes, dans lequel les éléments de sortie (30) comprennent une pluralité de trous de sortie (31) et une pluralité de fentes de sortie (32) de forme allongée disposées autour des trous de sortie (31).

9. Appareil selon la revendication 8, dans lequel les trous de sortie (31) sont sensiblement perpendiculaires à la paroi avant (29), et les fentes de sortie (32) sont orientées selon un angle compris entre 0° et 90° par rapport à la paroi avant (29), de telle sorte que l'écoulement de gaz sous pression ait une forme divergeant vers l'extérieur.

10. Appareil selon l'une quelconque des revendications précédentes, dans lequel la paroi avant (29) est réalisée en une matière plastique électriquement isolante.

11. Appareil selon l'une quelconque des revendications précédentes, dans lequel le dispositif pneumatique (4) comprend deux desdits manifolds (11) munis d'embouchures de sortie respectives (13) orientées de façon à délivrer dans l'environnement extérieur deux flux de mélange pesticide qui sont opposés l'un à l'autre.

12. Appareil selon la revendication 11, et comprenant deux desdits panneaux de blindage (27), faisant chacun face aux embouchures de sortie (13) d'un manifold respectif (11).

13. Appareil selon l'une quelconque des revendications précédentes, dans lequel chaque manifold (11) est monté de façon à tourner autour de son propre axe longitudinal (11a).

14. Appareil selon l'une quelconque des revendications précédentes, dans lequel chaque panneau de blindage (27) est monté de façon à tourner autour d'un axe de rotation (27a) sensiblement parallèle à la première direction (12).

15. Appareil selon l'une quelconque des revendications précédentes, dans lequel le dispositif pneumatique (4) comprend, pour chacun desdits manifold (11), une vanne de délivrance montée au niveau de l'orifice d'entrée du manifold (11) de façon à commander de façon sélective le débit d'écoulement d'air délivré à travers le manifold (11) lui-même.

16. Procédé pour le traitement aux pesticides de cultures agricoles, comprenant les étapes consistant à :
délivrer un écoulement d'air à travers une pluralité d'embouchures de sortie (13) ;
délivrer un produit pesticide à l'intérieur de l'écoulement d'air délivré à travers les embouchures de sortie (13) et générer un écoulement de mélange pesticide ;
charger électriquement l'écoulement de mélange pesticide délivré à travers les embouchures de sortie (13) ; et
délivrer l'écoulement de mélange pesticide contre un premier côté d'une culture agricole ;
et **caractérisé en ce qu'**il comprend également l'étape consistant à :
délivrer un écoulement d'un gaz sous pression à l'encontre de l'écoulement de mélange pesticide sortant d'un deuxième côté de la culture agricole opposé au premier côté, de façon à empêcher la dispersion dans l'environnement du mélange pesticide lui-même.
